# EUROPÄISCHE PATENTSCHRIFT

(11) **EP 1 669 407 B1**
(45) Veröffentlichungstag und Bekanntmachung des Hinweises auf die Patenterteilung: **12.10.2011**
(21) Anmeldenummer: 05025845.8
(22) Anmeldetag: 26.11.2005
(51) Int. Cl.: C08L 53/02, C08F 297/04, C08L 51/00, C08F 8/00

(54) **Transparente Mischungen linearer Styrol-Butadien-Blockcopolymerer**
Transparent mixtures of linear styrene-butadiene-blockcopolymers
Mélanges transparents de copolymères à blocs du type styrène-butadiène

(30) Priorität: 10.12.2004 DE 102004059783
(43) Veröffentlichungstag der Anmeldung: 14.06.2006
(73) Patentinhaber: BASF SE, 67056 Ludwigshafen (DE)
(72) Erfinder: Knoll, Konrad, Dr., 68199 Mannheim (DE); Wagner, Daniel, Dr., 67098 Bad Dürkheim (DE); Koch, Jürgen, Dr., 67141 Neuhofen (DE); Merkel, Peter, 2950 Kapellen (BE)

(56) Entgegenhaltungen:
- EP-A- 0 492 490
- WO-A-00/58380
- WO-A-03/046075
- US-A- 5 693 718
- US-A- 6 025 071
- US-A1- 2002 103 297
- US-B1- 6 541 569

## Beschreibung

Die Erfindung betrifft Mischungen enthaltend lineare Blockcopolymere aus vinylaromatischen Monomeren und Dienen der Struktur (I) S₁-B₁-S₂ und (II) B₂-S₃, wobei S₁ für einen Block aus vinylaromatischen Monomeren mit einer zahlenmittleren Mplmasse Mₙ im Bereich von 40.000 bis 100.000 g/mol, S₂ und S₃ jeweils für Blöcke aus vinylaromatischen Monomeren mit einer zahlenmittleren Molmasse Mₙ im Bereich von 5.000 bis 20.000 g/mol, B₁ und B₂ jeweils für Blöcke aus Dienen oder Copolymerblöcke aus Dienen und vinylaromatischen Monomeren mit einer zahlenmittleren Molmasse Mₙ im Bereich von 15.000 bis 100.000 g/mol steht, und das Verhältnis der Blockcopolymeren (I)/(II) im Bereich von 0,5 bis 10 liegt. Des weiteren betrifft die Erfindung Verfahren zur Herstellung der Mischungen und deren teilweise oder vollständige Hydrierung.

Zähe, transparente Werkstoffe auf der Basis von anionischen polymerisierten Styrol-Butadien-Blockcopolymeren sind bekannt und im Markt für Extrusions- und Spritzgussanwendungen etabliert. Die Blockcopolymeren können linear oder sternförmig aufgebaut sein. Die in der Regel durch Kopplung hergestellten sternförmigen Biockcopolymeren werden durch zwei- oder mehrfache Initiierung ein unsymmetrischer Aufbau erreicht.

Lineare Styrol-Butadien-Blockcopolymere werde in der Regel nur einfach initiiert. Durch entsprechende Monomerabfolge kann ein unsymmetrischer Aufbau erzielt werden. Ein langer, außenliegender Styrolblock bewirkt eine gewisse Verträglichkeit des Blockcopolymeren mit Standardpolystyrol. Daher können diese Blockcopolymeren zur Erhöhung der Steifigkeit mit dem preisgünstigeren Standardpolystyrol in Mengen von 10 - 70 Gew.-%, bezogen auf den Blend, abgemischt werden. Je nach Polystyrolmenge nimmt die Transparenz ab und gleichzeitig tritt eine Trübung (Haze) auf. Insbesondere bei den wirtschaftlich interessanten Mischungen mit etwa 60 Gew.% Standartpolystyrol sind die optischen Eigenschaften in der Regel ungünstig.

Styrol-Butadien-Blockcopolymere und Mischungen mit Polystyrol sind mit vielfältigen Strukturen bekannt. Die Blockcopolymere können linear oder sternförmig verzweigt sein und Blöcke gleicher oder unterschiedlicher Molmassen aufweisen, so dass symmetrische und unsymmetrische Strukturen resultieren. Die Butadien-haltigen Blöcke können auch Styrol enthalten. Zwischen den einzelnen Blöcken können scharfe oder verschmierte Übergänge auftreten. Eine Übersicht über Styrol-Butadien-Blockcopolymere findet sich z. B. in Kunststoff Handbuch, Bd. 4 Polystyrol, Carl Hanser-Verlag München-Wien 1996, Kapitel 3.3.4, Seiten 161 - 164.

Mischungen von linearen Dreiblockcopolymeren S-B-S mit unterschiedlicher Zusammensetzung und Molmassen sind aus DE-A 29 40 861 bekannt. Die Mischung wird durch sequentielle anionische Polymerisation mit zweifacher, gemeinsamer Initator- und Styroldosierung erhalten. Das Verhältnis der Initiatormenge in der ersten Stufe zur der in der zweiten Stufe liegt im Bereich von 1:2 bis 1:7, das bedeutet, das Blockcopolymere mit dem kürzeren Styrolblock überwiegt deutlich. Während der Übergang zwischen dem ersten Styrolblock und dem Butadien-haltigen Block scharf ist; geht der Butadien-haltige Block graduell in den zweiten Styrolblock über.

Die US 5,227,419 beschreibt Mischungen von Blockcopolymeren, deren Butadien-haltige Blöcke einen Styrolgradienten aufweisen. In der Mischung liegt das Blockcopolymere mit dem höheren Styrolblockanteil ebenfalls in untergeordneter Menge vor.

Die beschriebenen Blockcopolymeren führen jedoch in Mischungen mit Polystyrol bei vergleichbarer Zähigkeit zu einer drastischen Verringerung der Steifigkeit gegenüber dem von Polystyrol. Auch die Wärmeformbeständigkeit wird deutlich erniedrigt.

Transparente Mischungen aus linearen Dreiblockcopolymeren mit endständigen Styrolblöcken und Polystyrol werden in WO 03/046075 beschrieben. Sie können durch zweifache Initiierung erhalten werden.

Die WO 00/58380 beschreibt unter anderem lineare Blockcopolymerere mit verbesserter Zäheffizienz, die einen Copolymerblock aus Styrol und Butadien mit statistischer Verteilung aufweisen. Die genannten Mischungen können aber unter bestimmten Verarbeitungsbedingungen, z. B. bei zu langen Verweilzeiten bei 200°C ohne Scherung entmischen und damit zu Trübungen führen.

Aufgabe der Erfindung bestand darin, den genannten Nachteilen abzuhelfen und transparente Mischungen von Styrol-Butadien-Blockcopolymeren bereitzustellen, die in Abmischungen mit Polystyrol auch bei höheren Polystyrolanteilen eine hohe Zähigkeit und gute Transparenz aufweisen.

Demgemäss wurden die oben genannten Mischungen gefunden.

Das Verhältnis der Blockcopolymeren (I)/(II) liegt im Bereich von 0,5 bis 10, bevorzugt im Bereich von 1 bis 5, besonders bevorzugt im Bereich von 2 bis 3.

Als vinylaromatische Monomere kommen beispielsweise Styrol, alpha-Methylstyrol, kernalkylierte Styrole wie p-Methylstyrol oder Tertiärbutylstyrol, oder 1,1-Diphenylethylen oder Mischungen davon in Betracht.

Bevorzugte Diene sind Butadien, Isopren, 2,3-Dimethylbutadien, 1,3-Pentadien, 1,3-Hexadien oder Piperylen oder deren Mischungen; besonders bevorzugt sind Butadien und Isopren.

Besonders bevorzugte Blockcopolymere werden aus den Monomeren Styrol und Butadien gebildet.

Die Blöcke B₁ und B₂ können ausschließlich aus Dienen oder aus Dienen und vinylaromatischen Monomeren aufgebaut sein. Das Verhältnis vinylaromatisches Monomer/Dien liegt für die Blöcke B₁ und B₂ in der Regel im Bereich von 0 bis 2, wobei in den Blöcken B₁ und B₂ das gleiche oder verschiedene Verhältnisse vinylaromatisches Monomer/Dien vorliegen können. Bevorzugt sind die Blöcke B₁ und B₂ Homopolydienblöcke, insbesondere Homopolybutadienblöcke oder Copolymerblöcke mit einem Verhältnis vinylaromatisches Monomer/Dien im Bereich von 0,3 bis 1,5. Besonders bevorzugt weisen die Copolymerblöcke eine statistische Verteilung der Dien- und vinylaromatischen Monomeren auf.

Die Übergänge zwischen den einzelnen Blöcken sind scharf, das heißt die Zusammensetzung ändert sich sprunghaft.

Die zahlenmittleren Molmassen Mₙ von S₁ liegen im Bereich von 40.000 bis 100.000 g/mol, bevorzugt im Bereich von 60.000 bis 85.000, besonders bevorzugt im Bereich von 70.000 bis 80.000. Die zahlenmittleren Molmassen Mₙ von S₂ und S₃ liegen jeweils und unabhängig voneinander im Bereich von 5.000 bis 20.000 g/mol, bevorzugt im Bereich von 8.000 bis 17.000 g/mol, besonders bevorzugt im Bereich von 11.000 bis 14.000 g/mol. Die Blöcke B₁ und B₂ aus Dienen oder Copolymerblöcke aus Dienen und vinylaromatischen Monomeren weisen jeweils unabhängig voneinander eine zahlenmittleren Molmasse Mn im Bereich von 15.000 bis 100.000 g/mol, bevorzugt im Bereich von 50.000 bis 75.000 g/mol, besonders bevorzugt im Bereich von 60.000 bis 70.000 g/mol auf.

Bevorzugt sind die Blockcopolymeren (I) unsymmetrisch aufgebaut, das heißt die Blöcke S₁ und S₂ weisen unterschiedliche zahlenmittlere Molmassen Mₙ auf, bevorzugt mit einem Verhältnis der zahlenmittleren Molmassen von S₁ zu S₂ von mindestens 2, bevorzugt im Bereich von 5 - 8.

Die erfindungsgemäßen Mischungen können hergestellt werden, indem die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend im Verhältnis (I)/(II) im Bereich von 0,5 bis 10 abgemischt werden.

Bevorzugte erfindungsgemäße Blockcopolymere können beispielsweise durch sequentielle anionische Polymerisation gebildet werden, wobei mindestens die Polymerisation der Weichblöcke (B/S) in Gegenwart eines Radomizers erfolgt. Die Gegenwart von Randomizern bewirkt die statistische Verteilung der Diene und vinylaromatischen Einheiten im Weichblock (B/S). Als Randomizer eignen sich Donorlösungsmittel, wie Ether, beispielsweise Tetrahydrofuran, oder tert.-Amine oder lösliche Kaliumsalze. Für eine ideale statistische Verteilung werden im Falle von Tetrahydrofuran Mengen von in der Regel über 0,25 Volumenprozent, bezogen auf das Lösungsmittel, verwendet. Bei geringen Konzentrationen erhält man sogenannte "tapered" Blöcke mit einem Gradienten in der Zusammensetzung der Comonomeren.

Bei den angegebenen höheren Mengen an Tetrahydrofuran erhöht sich gleichzeitig der relative Anteil der 1,2-Verknüpfungen der Dieneinheiten auf etwa 30 bis 35 %.

Bei Verwendung von Kaliumsalzen erhöht sich der 1,2-Vinylgehalt in den Weichblöcken dagegen nur unwesentlich. Die erhaltenen Blockcopolymeren sind daher weniger vernetzungsanfällig und weisen bei gleichem Butadiengehalt eine niedrigere Glasübergangstemperatur auf.

Das Kaliumsalz wird im allgemeinen in Bezug auf den anionischen Polymerisationsinitiator im molaren Unterschuss eingesetzt. Bevorzugt wählt man ein molares Verhältnis von anionischem Polymerisationsinitiator zu Kaliumsalz im Bereich von 10:1 bis 100:1, besonders bevorzugt im Bereich von 30:1 bis 70:1. Das verwendete Kaliumsalz sollte im allgemeinen in Reaktionsmedium löslich sein. Geeignete Kaliumsalze sind beispielsweise Kaliumalkoholate, insbesondere ein Kaliumalkoholat eines tertiären Alkohols mit mindestens 5 Kohlenstoffatomen. Besonders bevorzugt werden Kalium-2,2-dimethyl-1-propanolat, Kalium-2-methyl-butanolat (Kaliumtertiäramylat), Kalium-2,3-dimethyl-3-pentanolat, Kalium-2-methyl-hexanolat, Kalium-3,7-dimethyl-3-octanolat (Kaliumtetrahydrolinaloolat) oder Kalium-3-ethyl-3-pentanolat eingesetzt. Die Kaliumalkoholate sind beispielsweise durch Umsetzung von elementarem Kalium, Kalium/Natrium-Legierung oder Kaliumalkylaten und den entsprechenden Alkoholen in inertem Lösungsmittel zugänglich.

Zweckmäßigerweise gibt man das Kaliumsalz erst nach der Zugabe des anionischen Polymerisationsinitiators der Reaktionsmischung zu. Auf diese Weise kann eine Hydrolyse des Kaliumsalzes durch Spuren an protischen Verunreinigungen vermieden werden. Besonders bevorzugt wird das Kaliumsalz kurz vor der Polymerisation des statistischen Weichblockes B/S zugegeben.

Als anionischer Polymerisationsinitiator können die üblichen monofunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sek.-Butyl-, tert.-Butyl-, Phenyl-, Diphenylhexyl-, Butadienyl-, Isoprenyl-, Polystyryllithium. Die benötigte Menge an Polymerisationsinitiator richtet sich nach dem gewünschten Molekulargewicht. In der Regel liegt sie im Bereich von 0,001 bis 5 mol-%, bezogen auf die Gesamtmonomermenge.

Die Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Octan, Benzol, Alkylbenzole, wie Toluol, Xylol, Ethylbenzol oder Decalin oder geeignete Gemische. Bevorzugt werden Cyclohexan und Methylcyclohexan verwendet.

In Gegenwart von retardierend auf die Polymerisationsgeschwindigkeit wirkenden Metallorganylen, wie Magnesium-, Aluminium- oder Zinkalkylen, kann die Polymerisation auch lösungsmittelfrei durchgeführt werden.

Nach Beendigung der Polymerisation können die lebenden Polymerketten mit einem Kettenabbruchmittel verschlossen werden. Als Kettenabbruchmittel eignen sich protonaktive Substanzen oder Lewis-Säuren, wie beispielsweise Wasser, Alkohole, aliphatische oder aromatische Carbonsäuren sowie anorganische Säuren wie Kohlensäure oder Borsäure.

Die Abmischung der Blockcopolymeren kann zu beliebiger Zeit nach Beendigung der Polymerisation, also beispielsweise vor oder nach der Terminierung, Entgasung oder sonstigen Aufarbeitungsschritten erfolgen. Die zeitlich oder räumlich getrennte Herstellung der Blockcopolymeren (I) und (II) hat den Vorteil, dass die zahlenmittleren Molmassen Mₙ der einzelnen Blöcke S und B frei gewählt werden können.

Nach einem alternativen Verfahren können die Blockcopolymeren (I) und (II) durch sequentielle anionische Polymerisation von vinylaromatischen Monomeren und Dienen mit alkalimetallorganischen Initiatoren gleichzeitig in einem Reaktoren durch zweifache Initiierung erfolgen. In einer ersten Stufe erfolgt die gemeinsame Dosierung von Initiator I₁ und vinylaromatischen Monomeren und in einer zweiten Stufe nach vollständigem Umatz der vinylaromatischen Monomeren der ersten Stufe die gemeinsame Dosierung von Initiator I₂ und Dienen oder Dienen und vinylaromtische Monomeren. Das Verhältnis der Initiatormenge I₁ der ersten Dosierung zur Initiatormenge I₂ der zweiten Dosierung wird im Bereich von 0,5 bis 10 gewählt. Nach jeder Dosierung wird bis zum vollständigen Umsatz der Monomeren polymerisiert. Die nach diesem Verfahren erhaltenen Mischungen weisen jeweils gleiche zahlenmittleren Molmassen Mₙ für die Blöcke S₂ und S₃ und gleiche zahlenmittleren Molmassen Mₙ für die Blöcke B₁ und B₂ auf. Die aufeinanderfolgenden Dosierungen und die gebildeten Polymerspezies sind in Tabelle 1 zusammengestellt:

**Tabelle 1: Dosierfolge bei zweifacher Initiatordosierung**

| Stufe | Monomere/Initiator | Gebildete Spezies |
|---|---|---|
| 1 | Initiator (I₁) und vinylaromatisches Monomer | S₁-I₁ |
| 2 | Initiator (I₂) und Dien oder Dien und vinylaromatisches Mo-nomer | S₁-Bᵢ-I₁ |
| | | B₂-I₂ |
| 3 | Vinylaromatisches Monomer | S₁-B₁-S₂-I₁ |
| | | B₂-S₃-I₂ |
| 4 | Terminierungsreagenz, z.B. Isopropanol | S₁-B₁-S₂ |
| | | B2-S₃ |

Bei Verwendung einer Mischung aus Dien/vinylaromatischem Monomer in Stufe 2 kann durch Zugabe von Lewis-Basen, wie Tetrahydrofuran, oder von Kaliumsalzen, wie Kaliumtetrahydrolinaloolat, eine statistische Verteilung der vinylaromatischen Monomeren und Dienen in den Blöcken B₁ und B₂ erreicht werden.

Durch mehrmalige Dosierung von Dienen oder Dienen und vinylaromatischen Monomeren zwischen Stufe 2 und 3 ohne erneute Initiatordosierung können Blöcke B₁ und B₂ gebildet werden, die sich aus mehreren Teilblöcken zusammensetzen. Besonders bevorzugt wird in Stufe 2 eine Mischung von Dienen und vinylaromatischen Monomeren eingesetzt und nach vollständigem Umsatz nochmals eine Mischung von Dienen und vinylaromatischen Monomeren mit unterschiedlichem Verhältnis von Vinylaromatischem Monomer/Dien zudosiert und polymerisiert. Auf diese Weise erhält man Blöcke B₁ und B₂, die jeweils aus zwei Copolymerblöcken (B/S)ₐ und (B/S)_{b} zusammengesetzt sind, wobei das Verhältnis vinylaromatisches Monomer/Dien im Block (B/S)ₐ im Bereich von 1 bis 1,5 und im Block (B/S)_{b} im Bereich von 0,3 bis 1 liegt. Nach den Stufen 3 und 4 ergeben sich somit die Strukturen (I) S₁-(B/S)ₐ-(B/S)_{b}-S₂ und (II) (B/S)ₐ-(B/S)_{b}-S₃.

Die erfindungsgemäße Mischung enthält Blockcopolymere mit ein und zwei endständigen Blöcken S aus vinylaromatischen Monomeren. Um eine Separation der Blockcopolymeren und eine Verschlechterung der Transparenz der Mischung zu verhindern, sollte die Menge der zweiten Initiatordosierung I₂ kleiner als der ersten Initiatordosierung I₁ sein. Die Aufteilung des Initiators bewirkt eine bessere Verträglichkeit der erfindungsgemäßen Mischung mit Standardpolystyrol mit einem mittleren M_{w} im Bereich von 180.000 bis 350.000 g/mol. Das Initiatorverhältnis I₁/I₂ liegt bevorzugt im Bereich von 0,5/1 bis 10/1, besonders bevorzugt im Bereich von 2/1 bis 3/1.

Die erfindungsgemäßen Mischungen aus den linearen Blockcopolymeren (I) und (II) können mit thermoplastischen Polymeren in weiten Bereichen abgemischt werden. Bevorzugte Mischungen enthalten 5 bis 95 Gewichtsprozent der linearen Blockcopolymeren (I) und (II) und 95 bis 5 Gewichtsprozent Standardpolystyrol (GPPS) oder Schlagzähpolystyrol (HIPS). Solche Mischungen lassen sich durch Compoundierung während der Entgasung der Blockcopolymeren, beispielsweise durch Zugabe von Polystyrol als "Coldfeed" auf einem Entgasungsextruder herstellen. Durch die gemeinsame Aufarbeitung erhält man homogene ternäre Mischungen, die beim Verarbeiter auch direkt auf nichtmischenden Spritzgussmaschinen eingesetzt werden können. Alternativ können aber auch Granulatmischungen auf Knetern, Extrudern oder mischenden Spritzgussmaschinen direkt zu ternären Mischungen verarbeitet werden. Bei der Herstellung von Folien erfolgt die Abmischung in der Regel direkt im Aufschmelzextruder.

Die Mischungen zeichnen sich durch eine hohe Zähigkeit bei gleichzeitig hoher Steifigkeit aus. Dies zeigt sich beispielsweise in einer höheren Reissdehnung bei gleichem Elastizitätsmodul gegenüber herkömmlichen Styrol-Butadien-Blockcopolymermischungen mit Polystyrolen. Sie eigenen sich daher vor allem für den Spritzguss und lassen aufgrund des guten Zähigkeits-/Steifigkeitsverhältnisses ein materialsparendes Design zu. Die Mischungen lassen sich zu zähen Formkörpern, beispielsweise transparenten Kleiderbügeln verarbeiten, die auch bei höheren Temperaturen eine sehr gute Dimensionsstabilität aufweisen.

Ebenso bevorzugt sind Anwendungen in der Extrusion, etwa zur Herstellung von Tiefziehfolien, die dann zu Bechern, Deckeln und Lunchboxen und anderen Behältnissen thermogeformt werden können. Das hohe Zähigkeits-Steifigkeitsverhältnis lässt hier die Verwendung dünnerer Folien unter Erhalt der Festigkeit zu, was zu einer signifikanten Materialeinsparung führt.

Die erfindungsgemäße Blockcopolymermischungen lassen sich durch teilweise oder vollständige Hydrierung modifizieren. In der Regel liegt der Hydriergrad der olefinischen Doppelbindungen bei 97 % und höher, der Hydrierungsgrad der vinylaromatischen Monomeren beträgt bevorzugt mindestens 90 %, besonders bevorzugt mindestens 95 insbesondere 98 %.

Der Anteil der einpolymerisierten Dieneinheiten, der in der 1,2-Vinylform vorliegt, kann durch die Zugabe von Substanzen mit Donoreigenschaften, wie Ether oder Amine, geregelt werden.

Bevorzugt werden hierfür Tetrahydrofuran, Dimethoxyethan oder 2-Alkylfurfurylether in Mengen von 0,1 bis 1 Vol.-%, insbesondere 0,25 bis 0,5 Vol.-%, bezogen auf den als Lösungsmittel verwendeten Kohlenwasserstoff, z.B. Cyclohexan.

Anschließend an die Herstellung des Blockcopolymeren werden die ungesättigten Bindungen der Dieneinheiten und auch der vinylaromatischen Einheiten des Blockcopolymeren mit einem Hydrierkatalysator hydriert. Bevorzugt werden geträgerte Hydrierkatalysatoren eingesetzt. Als Trägermaterial eignen sich beispielsweise anorganische Substrate wie Bariumsulfat, Silikate, Kohlenstoff oder Aluminiumoxide. Geeignete Hydriermetalle sind beispielsweise Nickel, Kobalt, Rhodium, Ruthenium, Palladium, Platin oder andere Metalle der Gruppe 8.

Die Hydrierung erfolgt bevorzugt in einem gesättigten Kohlenwasserstoff als Lösungsmittel, in welchem das Blockcopolymere löslich ist. Bevorzugt werden cycloaliphatische Kohlenwasserstoffe, insbesondere Cyclohexan. Sinnvollerweise wird das gleiche Lösungsmittel wie bei der Polymerisation verwendet, so dass die Hydrierung in einem Verfahrensschritt, der sich an die Polymerisation anschließt, erfolgen kann. Die Hydrierung kann diskontinuierlich oder kontinuierlich erfolgen, bevorzugt ist eine kontinuierliche Hydrierung an einem Festbettkatalysator.

Die Hydrierung erfolgt im allgemeinen bei Temperaturen im Bereich von 40°C bis 250°C, besonders bevorzugt im Bereich von 120°C bis 180°C. Die Hydrierung kann bei Normaldruck bis 350 bar bevorzugt im Bereich von 100 bis 250 bar durchgeführt werden.

### Beispiele:

E-Modul, Zugfestigkeit und Reissdehnung wurden nach ISO 527 an ausgestanzten Normzugstäben aus gepressten 1 mm Platten bestimmt. (Pressbedingungen: 200°C, 5 min).

Die Transmissionsmessungen erfolgten im Bereich von 400 - 700 nm an verpressten Rundscheiben der Schichtdicke 4 mm (Pressbedingungen: 200°C, 5 min).

### Beispiele 1 -3

Die Blockcopolymermischungen wurden nach den Angaben in Tabelle 2 durch sequentielle anionische Polymerisation mit zweifacher Initatordosierung (sec.-Butyllithium Bu-Li) in Stufe 1 oder 2 bei einem Feststoffgehalt von ca. 30 Gew.-% in Cyclohexan bei Temperaturen im Bereich von 50 - 80°C hergestellt. Nach Beendigung der Polymerisation wurde mit Isopropanol abgebrochen und mit CO₂/Wasser angesäuert. Die Polymerisation wurde in Gegenwart von Kalium-tertiär-Amylat (KTA) bei einem molaren Lithium/Kalium-Verhältnis von 38/1 durchgeführt, um einen statistischen S/B-Copolymerblock zu erhalten. Die Blockcopolymeren wurden auf einem 16 mm Entgasungsextruder vom Lösungsmittel befreit.

Die erhaltenen Blockcopolymermischungen enthalten Blockcopolymere mit statistischen Copolymerblöcken der Struktur (I) Sᵢ-(B/S)ₐ-(B/S)_{b}-S₂ mit einem zahlenmittleren Molekulargewicht von etwa 150.000 g/mol und der Struktur (II) (B/S)ₐ-(B/S)_{b}-S₃ mit einem zahlenmittleren Molekulargewicht von etwa 75.000 g/mol im molaren Verhältnis (I)/(II) entsprechend dem Initiatorverhältnis I₁/I₂.

**Tabelle 2:**

| Stufe | Dosierung | Beispiel 1 | Beispiel 2 | Beispiel 3 |
|---|---|---|---|---|
| 1 | sec.-BuLi [mol] | 27,812 | 25,65 | 27,81 |
| | Styrol [kg] | 2050 | 1950 | 2170,4 |
| | KTA [mol] | 1,012 | 1,012 | 1,012 |
| 2a | sec.-BuLi [mol] | 10,656 | 12,82 | 10,66 |
| | Butadien/Styrol [kg] | 565/785 | 565/785 | 519,8/752,3 |
| 2b | Butadien/Styrol [kg] | 685/415 | 685/415 | 630,2/397,7 |
| 3 | Styrol | 500 | 600 | 529,6 |
| | I₁/I₂ | 2,6/1 | 2/1 | 2,6/1 |

### Beispiele 1A bis 3C:

Die Blockcopolymermischungen der Beispiele 1 bis 3 wurden jeweils mit 60 Gew.-% (A), 50 Gew.-% (B) und 40 Gew.-% (C) Polystyrol mit einem mittleren Molekulargewicht M_{w} von ca. 270.000 (PS 158 K der BASF Aktiengesellschaft) auf einem 19 mm-Zweiwellenextruder bei 200°C gemischt. Die mechanischen und optischen Werte der Abmischungen sind in Tabelle 3 zusammengefasst.

### Vergleichsversuche VA, VB und VC

Analog den Beispielen 1 A bis 3 C wurde ein lineares Styrol-Butadien-Blockcopolymer der Struktur S₁-(B/S)₁-(B/S)₂-S₂ mit statistischen (B/S-Blöcken) nach Beispiel 3 aus WO 00/58380 hergestellt und mit 60 Gew.-% (A), 50 Gew.-% (B) und 40 Gew.-% (C) Polystyrol PS 158 auf einem 19 mm-Zweiwellenextruder bei 200°C gemischt.

**Tabelle 3: Eigenschaften der Blends der Beispiele 1 - 3 mit Polystyrol PS 158 K**

| Beispiel | E-Modul | Spannung bei | | | Dehnung bei | | | Transparenz | Haze | YI |
|---|---|---|---|---|---|---|---|---|---|---|
| | | FS | Fmax. | FR | FS | Fmax. | FR, | | | |
| | [N/mm²] | [N/mm²] | [N/mm²] | [N/mm²] | [%] | [%] | [%] | [%] | [%] | |
| 1A | 595 | ---- | 24,9 | 24,8 | -- | 252,3 | 253 | 70,7 | 8,7 | 29,8 |
| 1B | 927 | 22,8 | 23,1 | 22,2 | 13,9 | 78,3 | 129,2 | 65,7 | 13 | 36 |
| 1C | 913 | 23 | 24,7 | 23,9 | 6,1 | 64,8 | 93,2 | 65 | 12,7 | 37,4 |
| 2A | 715 | --- | 25 | 24,9 | - | 259,9 | 260,2 | 68,1 | 16,9 | 31 |
| 2B | 717 | 18,3 | 23,6 | 23,5 | 11 | 190,2 | 200,9 | 62,1 | 20,7 | 37,1 |
| 2C | 858 | 20,7 | 24,7 | 23,5 | 5,8 | 94,7 | 137,1 | 63,3 | 19 | 36,2 |
| 3A | 745 | -- | 23,7 | 23,6 | ---- | 230,3 | 231,7 | 69,2 | 11,3 | 29,8 |
| 3B | 866 | 20 | 22,7 | 22,3 | 10,6 | 114,7 | 145 | 66,9 | 13,2 | 32,7 |
| 3C | 1242 | 25,1 | 25,1 | 23,4 | 4,7 | 4,8 | 71,4 | 65,3 | 13,4 | 33,9 |
| VA | 1092 | -- | 27,5 | 26,9 | **----** | 239,6 | 242,5 | 45,0 | 75,7 | 17,7 |
| VB | 1192 | 21,4 | 28,5 | 28,1 | 6,8 | 171 | 187,8 | 44,6 | 86,2 | 15,2 |
| VC | 1368 | 26,5 | 29,9 | 28,4 | 3,0 | 76,6 | 101,7 | 45,3 | 76,2 | 16,1 |

| | | | | | | | | | | |
|---|---|---|---|---|---|---|---|---|---|---|
| FS = Streckspannung Fmax = maximale Spannung FR = Spannung bei Reißdehnung YI = Yellowness Index | | | | | | | | | | |

## Patentansprüche

1. Mischungen enthaltend lineare Blockcopolymere aus vinylaromatischen Monomeren und Dienen der Struktur
S₁-B₁-S₂ (I)
und
B₂-S₃ (II)
, wobei
S₁ für einen Block aus vinylaromatischen Monomeren mit einer zahlenmittleren Molmasse Mₙ im Bereich von 40.000 bis 100.000 g/mol,
S₂ und S₃ jeweils für Blöcke aus vinylaromatischen Monomeren mit einer zahlenmittleren Molmasse Mn im Bereich von 5.000 bis 20.000 g/mol,
B₁ und B₂ jeweils für einen oder mehrere Copolymerblöcke aus Dienen und vinylaromatischen Monomeren mit einer zahlenmittleren Molmasse Mₙ im Bereich von 15.000 bis 100.000 g/mol steht, wobei das Verhältnis vinylaromatisches Monomer/Dien in den Blöcken B₁ und B₂ im Bereich von 0,3 bis 1,5 liegt und
das Verhältnis der Blockcopolymeren (I)/(II) im Bereich von 0,5 bis 10 liegt.

2. Mischungen nach Anspruch 1, **dadurch gekennzeichnet, dass** das Verhältnis der Blockcopolymeren (I)/(II) im Bereich von 2 bis 3 liegt.

3. Mischungen nach Anspruch 1 oder 2, **dadurch gekennzeichnet, dass** das Verhältnis der zahlenmittleren Molmassen von S₁ zu S₂ im Bereich von 5 bis 8 liegt.

4. Mischungen nach einem der Ansprüche 1 bis 3, **dadurch gekennzeichnet, dass** die Blöcke B₁ und B₂ jeweils für einen oder mehrere Copolymerblöcke aus Dienen und vinylaromatischen Monomeren mit statistischer Verteilung stehen.

5. Mischungen nach einem der Ansprüche 1 bis 4, **dadurch gekennzeichnet, dass** die zahlenmittleren Molmassen Mₙ von
S₁ im Bereich von 60.000 bis 85.000, von
S₂ und S₃ jeweils im Bereich von 8.000 bis 17.000 g/mol, und von B₁ und B₂ jeweils im Bereich von 50.000 bis 75.000 g/mol liegen.

6. Mischungen nach einem der Ansprüche 1 bis 5, **dadurch gekennzeichnet, dass** sich die Blöcke B₁ und B₂ aus jeweils zwei Copolymerblöcken (B/S)ₐ und (B/S)_{b} aus Dienen und vinylaromatischen Monomeren zusammensetzen, wobei das Verhältnis vinylaromatisches Monomer/Dien im Block (B/S)ₐ im Bereich von 1 bis 1,5 und im Block (B/S)_{b} im Bereich von 0,3 bis 1 liegt.

7. Mischungen nach einem der Ansprüche 1 bis 6, **dadurch gekennzeichnet, dass** jeweils die zahlenmittleren Molmassen Mₙ von S₂ und S₃ und die zahlenmittleren Molmassen von B₁ und B₂ den gleichen Wert aufweisen.

8. Mischungen nach einem der Ansprüche 1 bis 7, **dadurch gekennzeichnet, dass** sie
5 bis 95 Gewichtsprozent der linearen Blockcopolymeren (I) und (II) und
95 bis 5 Gewichtsprozent Standardpolystyrol oder Schlagzähpolystyrol enthalten.

9. Mischungen, erhältlich durch teilweise oder vollständige Hydrierung der Mischungen nach einem der Ansprüchen 1 bis 8.

10. Mischungen nach Anspruch 9, **dadurch gekennzeichnet, dass** der Hydriergrad der vinylaromatischen Monomereinheiten mindestens 90 % beträgt.

11. Mischungen nach Anspruch 8, **dadurch gekennzeichnet, dass** die einpolymerisierten Dieneinheiten zu mehr als 30 %, bezogen auf die Summe der Dieneinheiten, in der 1,2-Vinylform vorliegen.

12. Verfahren zur Herstellung von Mischungen nach einem der Ansprüche 1 bis 8, **dadurch gekennzeichnet, dass** die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend im Verhältnis (I)/(II) im Bereich von 0,5 bis 10 abgemischt werden.

13. Verfahren zur Herstellung von Mischungen nach Anspruch 7, **dadurch gekennzeichnet, dass** die Blockcopolymeren (I) und (II) durch sequentielle anionische Polymerisation von vinylaromatischen Monomeren und Dienen mit alkalimetallorganischen Initiatoren gleichzeitig in einem Reaktoren durch zweifache Initiierung, umfassend die gemeinsame Dosierung von Initiator I₁ und vinylaromatischen Monomeren in einer ersten Stufe und gemeinsame Dosierung von Initiator I₂ und Dienen oder Dienen und vinylaromatischen Monomeren in einer zweiten Stufe hergestellt werden, wobei das Verhältnis der Initiatormenge I₁ der ersten Dosierung zur Initiatormenge I₂ der zweiten Dosierung im Bereich von 0,5 bis 10 liegt.

## Claims

1. A mixture comprising linear block copolymers composed of vinylaromatic monomers and dienes of the structure
S₁-B₂-S₂ (I)
and
B₂-S₃ (II)
, where
S₁ is a block composed of vinylaromatic monomers whose number-average molar mass Mₙ is in the range from 40 000 to 100 000 g/mol,
each of S₂ and S₃ is a block composed of vinylaromatic monomers whose number-average molar mass Mn is in the range from 5000 to 20 000 g/mol, each of B₁ and B₂ is one or more copolymer blocks composed of dienes and of vinylaromatic monomers whose number-average molar mass Mₙ is in the range from 15 000 to 100 000 g/mol, where the vinylaromatic monomer/diene ratio in the blocks B₁ and B₂ is in the range from 0.3 to 1.5, and the ratio of the block copolymers (I)/(II) is in the range from 0.5 to 10.

2. The mixture according to claim 1, wherein the (I)/(II) ratio of the block copolymers is in the range from 2 to 3.

3. The mixture as claimed in claim 1 or 2, wherein the S₁ : S₂ number-average molar masses ratio is in the range from 5 to 8.

4. The mixture according to any of claims 1 to 3, wherein each of the blocks B₁ and B₂ is one or more copolymer blocks composed of dienes and of vinylaromatic monomers with random distribution.

5. The mixture according to any of claims 1 to 4, wherein the number-average molar masses Mₙ of S₁ are in the range from 60 000 to 85 000 g/mol,
of each of S₂ and S₃ are in the range from 8000 to 17 000 g/mol,
and of each of B₁ and B₂ are in the range from 50 000 to 75 000 g/mol.

6. The mixture according to any of claims 1 to 5, wherein each of the blocks B₁ and B₂ is composed of two copolymer blocks (B/S)ₐ and (B/S)_{b} composed of dienes and of vinylaromatic monomers, where the vinylaromatic monomer/diene ratio in the block (B/S)ₐ is in the range from 1 to 1.5 and in the block (B/S)_{b} is in the range from 0.3 to 1.

7. The mixture according to any of claims 1 to 6, wherein, respectively, the number-average molar masses Mₙ of S₂ and S₃ and the number-average molar masses of B₁ and B₂ have the same value.

8. The mixture according to any of claims 1 to 7, which comprises
from 5 to 95 percent by weight of the linear block copolymers (I) and (II), and
from 95 to 5 percent by weight of standard polystyrene or impact-resistant polystyrene.

9. A mixture obtainable via partial or complete hydrogenation of the mixtures according to any of claims 1 to 8.

10. The mixture according to claim 9, wherein the degree of hydrogenation of the vinylaromatic monomer units is at least 90%.

11. The mixture according to claim 8, wherein more than 30%, based on the entirety of the diene units, of the copolymerized diene units are present in the 1,2-vinyl form.

12. A process for preparation of mixtures according to any of claims 1 to 8, which comprises preparing each of the block copolymers (I) and (II) via sequential anionic polymerization of vinylaromatic monomers and of dienes using organic compounds of alkali metals as initiators, in succession or in different reactors, and then blending them in a (I)/(II) ratio in the range from 0.5 to 10.

13. A process for preparation of mixtures according to claim 7, which comprises preparing the block copolymers (I) and (II) via sequential anionic polymerization of vinylaromatic monomers and of dienes using organic compounds of alkali metals as initiators simultaneously in a reactor via double initiation, comprising the joint feed of initiator I₁ and of vinylaromatic monomers in a first stage, and joint feed of initiator I₂ and of dienes or of dienes and of vinylaromatic monomers in a second stage, where the ratio of the amount of initiator I₁ of the first feed to the amount of initiator I₂ of the second feed is in the range from 0.5 to 10.

## Revendications

1. Mélanges contenant des copolymères séquencés linéaires à base de monomères vinylaromatiques et de diènes de structure
S₁-B₁-S₂ (I)
et
B₂-S₃ (II)
,
S₁ représentant une séquence de monomères vinylaromatiques ayant une masse moléculaire moyenne en nombre Mₙ dans la plage de 40 000 à 100 000 g/mole,
S₂ et S₃ représentant chacun des séquences de monomères vinylaromatiques ayant une masse moléculaire moyenne en nombre Mₙ dans la plage de 5 000 à 20 000 g/mole,
B₁ et B₂ représentent chacun une ou plusieurs séquences de copolymères de diènes et monomères vinylaromatiques ayant une masse moléculaire moyenne en nombre Mₙ dans la plage de 15 000 à 100 000 g/mole, le rapport monomère vinylaromatique/diène dans les séquences B₁ et B₂ se situant dans la plage de 0,3 à 1, 5 et le rapport des copolymères séquences (I)/(II) se situant dans la plage de 0,5 à 10.

2. Mélanges selon la revendication 1, **caractérisés en ce que** le rapport des copolymères séquencés (I)/(II) se situe dans la plage de 2 à 3.

3. Mélanges selon la revendication 1 ou 2, **caractérisés en ce que** le rapport des masses moléculaires moyennes en nombre de S₁ à S₂ se situe dans la plage de 5 à 8.

4. Mélanges selon l'une quelconque des revendications 1 à 3, **caractérisés en ce que** les séquences B₁ et B₂ représentent chacune une ou plusieurs séquences de copolymères de diènes et monomères vinylaromatique à distribution statistique.

5. Mélanges selon l'une quelconque des revendications 1 à 4, **caractérisés en ce que** les masses moléculaires moyennes en nombre Mₙ de
S₁ se situent dans la plage de 60 000 à 85 000, de S₂ et S₃ se situent chacune dans la plage de 8 000 à 17 000 g/mole, et de
B₁ et B₂ se situent chacune dans la plage de 50 000 à 75 000 g/mole.

6. Mélanges selon l'une quelconque des revendications 1 à 5, **caractérisés en ce que** les séquences B₁ et B₂ se composent chacune de deux séquences de copolymères (B/S)ₐ a et (B/S)_{b} de diènes et monomères vinylaromatiques, le rapport monomère vinylaromatique/diène se situant dans la séquence (B/S)ₐ dans la plage de 1 à 1,5 et dans la séquence (B/S)_{b} dans la plage de 0,3 à 1.

7. Mélanges selon l'une quelconque des revendications 1 à 6, **caractérisés en ce que** respectivement les masses moléculaires moyennes en nombre Mₙ de S₂ et S₃ et les masses moléculaires moyennes en nombre de B₁ et B₂ ont la même valeur.

8. Mélanges selon l'une quelconque des revendications 1 à 7, **caractérisés en ce qu'**ils contiennent
5 à 95 % en poids des copolymères séquencés linéaires (I) et (II) et
95 à 5 % en poids de polystyrène standard ou de polystyrène choc.

9. Mélanges, prouvant être obtenus par hydrogénation partielle ou totale des mélanges selon l'une quelconque des revendications 1 à 8.

10. Mélanges selon la revendication 9, **caractérisés en ce que** le degré d'hydrogénation des motifs monomères vinylaromatiques est d'au moins 90 %.

11. Mélanges selon la revendication 8, **caractérisés en ce que** les motifs diène incorporés par polymérisation sont présents sous la forme 1,2-vinyle à raison de plus de 30 %, par rapport à la somme des motifs diène.

12. Procédé pour la préparation de mélanges selon l'une quelconque des revendications 1 à 8, **caractérisé en ce qu'**on prépare successivement ou dans différents réacteurs les copolymères séquencés (I) et (II) chacun par polymérisation anionique séquentielle de monomères vinylaromatiques et de diènes avec des amorceurs organométalliques à base de métaux alcalins et ensuite on les mélange en un rapport (I) / (II) dans la plage de 0,5 à 10.

13. Procédé pour la préparation de mélanges selon la revendication 7, **caractérisé en ce qu'**on prépare simultanément dans un réacteur les copolymères séquencés (I) et (II) par polymérisation anionique séquentielle de monomères vinylaromatiques et de diènes avec des amorceurs organométalliques à base de métaux alcalins par double amorçage, comprenant l'addition dosée conjointe d'amorceur I₁ et de monomères vinylaromatiques dans une première étape et addition dosée conjointe d'amorceur I₂ et de diènes ou de diènes et de monomères vinylaromatiques dans une deuxième étape, le rapport de la quantité d'amorceur I₁ de la première addition dosée à la quantité d'amorceur I₂ de la deuxième addition dosée se situant dans la plage de 0, 5 à 10.
